(19) **Europäisches Patentamt European Patent Office Office européen des brevets**

(11) **EP 2 616 855 B1**

(12) **FASCICULE DE BREVET EUROPEEN**

(45) Date de publication et mention de la délivrance du brevet:
**26.10.2016 Bulletin 2016/43**

(51) Int Cl.:
**B82Y 20/00** *(2011.01)* **G01J 3/28** *(2006.01)*
**G02B 5/18** *(2006.01)* **G02B 5/20** *(2006.01)*

(21) Numéro de dépôt: **11767949.8**

(22) Date de dépôt: **15.09.2011**

(86) Numéro de dépôt international:
**PCT/EP2011/066029**

(87) Numéro de publication internationale:
**WO 2012/035110 (22.03.2012 Gazette 2012/12)**

(54) **FILTRE SPECTRAL PASSE BANDE À FORTE SÉLECTIVITÉ ET POLARISATION CONTRÔLÉE**

**SPEKTRALBANDPASSFILTER MIT HOHER SELEKTIVITÄT UND GESTEUERTER POLARISATION**

**SPECTRAL BAND-PASS FILTER HAVING HIGH SELECTIVITY AND CONTROLLED POLARIZATION**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.09.2010 FR 1057449**

(43) Date de publication de la demande:
**24.07.2013 Bulletin 2013/30**

(73) Titulaires:
- **Office National d'Etudes et de Recherches Aérospatiales (ONERA)**
  **91120 Palaiseau (FR)**
- **Centre National de la Recherche Scientifique (C.N.R.S.)**
  **75794 Paris Cedex 16 (FR)**

(72) Inventeurs:
- **VINCENT, Grégory**
  **F-75013 Paris (FR)**
- **HAIDAR, Riad**
  **F-75012 Paris (FR)**
- **COLLIN, Stéphane**
  **F-75013 Paris (FR)**
- **PELOUARD, Jean-Luc**
  **F-75020 Paris (FR)**

(74) Mandataire: **Osha Liang**
  **2, rue de la Paix**
  **75002 Paris (FR)**

(56) Documents cités:
**WO-A1-2007/118895** **WO-A2-2005/017570**
**WO-A2-2008/073439** **JP-A- 62 293 223**
**US-A- 5 726 805**

- **APPLIED PHYSICS LETTERS AMERICAN INSTITUTE OF PHYSICS USA, vol. 96, no. 22, 31 mai 2010 (2010-05-31), XP002637498, ISSN: 0003-6951, DOI: DOI:10.1063/1.3442487**

EP 2 616 855 B1

## Description

### Domaine technique de l'invention

La présente invention concerne un filtre spectral à forte sélectivité et polarisation contrôlée, notamment pour la réalisation de filtres dans l'infrarouge.

### Etat de l'art

Une technique classique connue pour réaliser une fonction de filtrage passe bande consiste à empiler des couches minces, en prenant soin de choisir le nombre, les épaisseurs des couches et la nature des matériaux en fonction du gabarit souhaité pour le filtre. La demande de brevet WO2008122431 décrit par exemple un tel filtre, dit filtre interférentiel. Cependant, dès lors qu'ils font intervenir un grand nombre de couches minces, ces composants présentent une fragilité dès qu'ils sont soumis à des cycles de variations de température, par exemple lorsqu'ils sont disposés dans un cryostat, notamment pour les applications dans l'infrarouge. En effet, ces cycles conduisent à une destruction de la structure de fait des coefficients de dilatation thermique qui, différant d'un matériau à l'autre et donc d'une couche à l'autre, induisent des contraintes. En outre, un filtre fonctionnant dans l'infrarouge nécessitera des couches plus épaisses qu'un filtre fonctionnant dans le visible, et très rapidement, on se trouvera confronter à des difficultés technologiques liées à l'épaisseur, difficultés aggravées lors de la réalisation de matrices de filtres pour laquelle il faudra faire varier les épaisseurs d'un filtre à l'autre.

Par ailleurs, pour certaines applications, notamment la détection thermique, il peut être intéressant de pouvoir analyser la polarisation de l'onde incidente pour distinguer le type d'objet détecté. Les composants basés sur la technologie de l'empilage de couches minces ne permettent pas une sélectivité en fonction de la polarisation.

Il est connu également d'associer à une couche mince un réseau diélectrique (voir par exemple la demande de brevet US5726805). Cette technique présente l'avantage de n'utiliser qu'une seule couche mais un filtre réalisé par cette technologie ne peut être que coupe bande lorsqu'il est utilisé en transmission.

Le document WO2007/118895 décrit un filtre spectral comprenant une couche métallique structurée réalisée par des fentes agissant comme des cavités résonnantes. La couche métallique est enrobée dans des couches en matériau diélectrique pour des raisons mécaniques liées au procédé de fabrication, le tout étant déposé sur une couche support.

Un objet de l'invention consiste à proposer un filtre spectral, passe bande lorsqu'il est utilisé en transmission, qui présente une forte sélectivité en longueur d'onde tout en permettant un contrôle de la polarisation.

## RESUME DE L'INVENTION

Selon un premier aspect, l'invention concerne un filtre spectral passe bande, optimisé pour la transmission d'une onde incidente à au moins une première longueur d'onde centrale $\lambda_0$ donnée, comprenant un réseau métallique d'épaisseur supérieure à environ $\lambda_0/50$ et comprenant au moins un premier ensemble de fentes sensiblement identiques, parallèles, de largeur inférieure à environ $\lambda_0 / 10$, espacées de façon périodique ou quasi-périodique selon une première période inférieure à ladite première longueur d'onde centrale, et comprenant en outre une couche en matériau diélectrique d'épaisseur et d'indice de réfraction donné, couplée avec le réseau métallique pour former un guide d'onde des ondes diffractées par le réseau, ladite première période du réseau étant adaptée pour que seuls les ordres 0 et $\pm$ 1 d'une onde à incidence normale et longueur d'onde $\lambda_0$ soient diffractés dans la couche de matériau diélectrique, l'ensemble couche diélectrique et réseau étant suspendu dans un fluide d'indice de réfraction proche de 1.

Selon une première variante, le réseau métallique est à une dimension avec un seul ensemble de fentes parallèles, formant un filtre passe bande polarisant.

Selon une deuxième variante, le réseau métallique est à deux dimensions, comprenant en outre un deuxième ensemble de fentes, sensiblement identiques, parallèles, espacées de façon périodique ou quasi-périodique selon une deuxième période, les fentes du deuxième ensemble de fentes étant agencées selon une direction différente de celles des fentes du premier ensemble.

Selon un exemple de la deuxième variante, la largeur des fentes du deuxième ensemble de fentes est sensiblement identique à celle des fentes du premier ensemble de fentes et les deux périodes sont identiques. Lorsque les fentes des deux ensembles de fentes sont perpendiculaires, le filtre ainsi réalisé est strictement non polarisant.

Selon un autre exemple de la deuxième variante, les deux périodes sont différentes et le filtre est optimisé pour le filtrage d'une onde incidente à au moins une première et une seconde longueurs d'onde centrales $\lambda_{01}$ et $\lambda_{02}$ : les première et seconde périodes sont inférieures aux première et seconde longueurs d'onde respectivement, et la période selon chacune des dimensions est adaptée pour que seuls les ordres 0 et 1 d'une onde à incidence normale et longueur d'onde $\lambda_{01}$ ou $\lambda_{02}$ respectivement soient diffractés dans la couche de matériau diélectrique. Le filtre ainsi obtenu est polarisant et la longueur d'onde filtrée dépend de la polarisation.

Selon une troisième variante, le réseau métallique est à deux dimensions, comprenant une pluralité d'ensembles de fentes, sensiblement identiques, parallèles, espacées de façon périodique ou quasi-périodique, les fentes de chacun des ensembles de fentes étant agencées selon des directions différentes pour former un motif répété selon deux directions, le motif étant par exemple hexagonal ou en forme de parallélogramme.

Selon l'une ou l'autre des variantes, la couche en matériau diélectrique peut être structurée selon un motif sensiblement similaire à celui formé parmi les fentes du réseau.

L'épaisseur de la couche diélectrique peut être suffisamment fine pour ne laisser qu'un seul mode guidé dans la couche diélectrique à ladite au moins une première longueur d'onde centrale.

Alternativement, l'épaisseur de la couche diélectrique est suffisamment épaisse pour permettre la propagation de plusieurs modes guidés dans la couche diélectrique, permettant la réalisation d'un filtre présentant plusieurs longueurs d'onde centrales de transmission.

Selon un exemple, le matériau formant la couche diélectrique comprend un des matériaux choisis parmi le nitrure de silicium, le carbure de silicium, l'oxyde de silicium, le fluorure d'yttrium, le sulfure de zinc, l'oxyde d'aluminium ou de magnésium.

Selon un exemple, le matériau formant le réseau comprend un des métaux choisis parmi l'or, l'aluminium, le cuivre, le tungstène, le nickel, le platine, l'argent.

Selon un exemple, la longueur d'onde centrale est comprise entre sensiblement 0,850 $\mu$m et 30 $\mu$m.

Selon une variante, le filtre spectral comprend en outre un substrat, l'ensemble couche diélectrique et réseau métallique étant suspendu sur le pourtour d'un orifice formé dans ledit substrat.

Selon un deuxième aspect, l'invention concerne une matrice multispectrale comprenant un ensemble de filtres spectraux selon le premier aspect, les réseaux desdits filtres spectraux étant couplés avec la même couche en matériau diélectrique, l'ensemble couche diélectrique et réseaux métalliques des filtres étant suspendu sur le pourtour d'un orifice formé dans un même substrat.

Selon un troisième aspect, l'invention concerne un système optronique de détection proche infrarouge ou infrarouge comprenant un détecteur et un filtre spectral selon le premier aspect ou une matrice multispectrale selon le deuxième aspect.

Selon une variante, le système optronique de détection comprend en outre un polariseur permettant de polariser une onde incidente selon une direction parallèle à l'une des directions des fentes du ou d'au moins un des réseau(x) métallique(s).

Selon un quatrième aspect, l'invention concerne une méthode de fabrication d'un dispositif de filtrage selon le premier ou le deuxième aspect comprenant :

- le dépôt sur une des couches d'un substrat d'une couche de silice et sur l'autre face du substrat d'une couche mince en diélectrique pour former le guide d'onde,
- le dépôt du ou des réseau(x) métallique(s) sur ladite couche en matériau diélectrique selon un motif donné,

- la gravure de la silice en face arrière du substrat selon un motif défini par lithographie UV ou électronique, aligné avec le motif du ou des réseau(x) formé(s) en face avant, puis la gravure du substrat en silicium de part en part, selon le précédent motif, afin d'obtenir une membrane suspendue formée de la couche en diélectrique et du ou des réseau(x).

Selon une première variante, le dépôt du ou des réseau(x) métallique(s) est obtenu après lithographie UV ou électronique.

Selon une deuxième variante, le dépôt du ou des réseau(x) métallique(s) est obtenu après nano-impression.

Lorsque la couche en matériau diélectrique est structurée, la gravure de ladite couche peut être également obtenue après lithographie UV ou électronique, ou après nano-impression.

BREVE DESCRIPTION DES DESSINS

D'autres avantages et caractéristiques de l'invention apparaîtront à la lecture de la description, illustrée par les figures suivantes :

Figures 1A et 1B, un schéma illustrant le principe d'un filtre passe bande selon l'invention et une variante d'un tel filtre;

Figures 2A à 2C, trois exemples de réalisation d'un filtre passe bande selon l'invention ;

Figure 3, des courbes montrant la réponse spectrale calculée pour un filtre passe bande du type de la figure 2A, pour différentes valeurs de période et de largeur de fente ;

Figures 4A, 4B des exemples de mise en oeuvre d'un filtre passe bande du type de la figure 2C ;

Figures 5A, 5B des exemples de réseaux à deux dimensions présentant des motifs respectivement hexagonal et en forme de parallélogramme ;

Figure 6, un schéma d'un exemple de matrice multispectrale comprenant une pluralité de filtres passe-bande selon l'invention ;

Figure 7, un schéma montrant un agencement de réseaux dans un exemple de matrice multispectrale ;

Figure 8, un schéma montrant un système de détection optronique intégrant un filtre spectral selon l'invention.

DESCRIPTION DETAILLEE

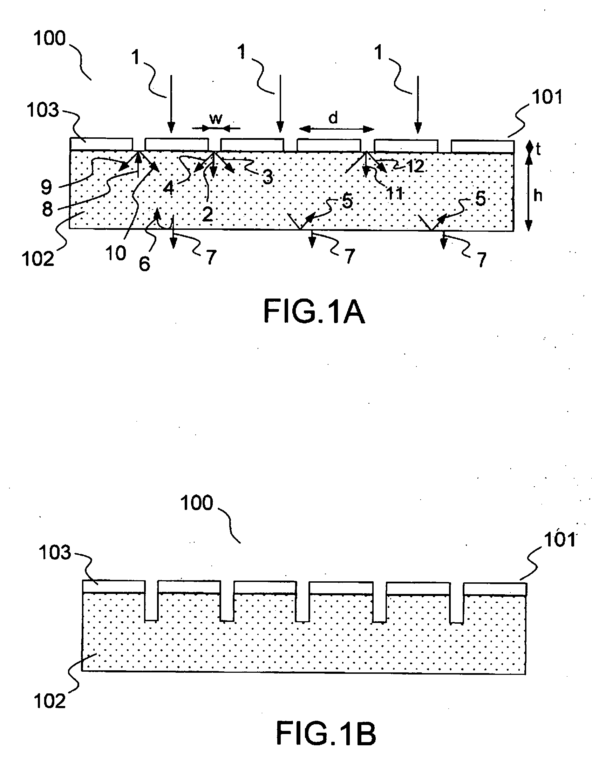

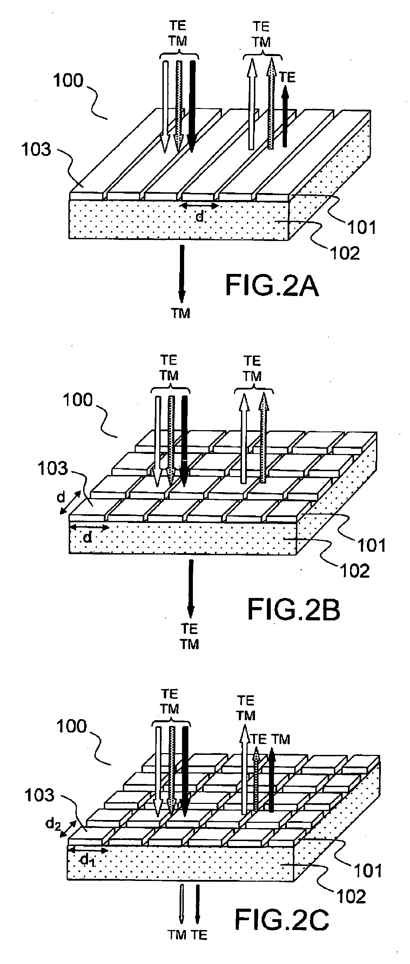

La figure 1A illustre par un schéma le principe d'un exemple de filtre passe bande 100 selon l'invention (vue en coupe) tandis que les figures 2A à 2C représentent des vues en perspectives de différents exemples de réalisation. Le filtre 100 comprend une couche mince 102 en matériau diélectrique sur laquelle est déposé un film métallique 101 perforé périodiquement, dans une ou plusieurs directions, par un motif 103 sub-longueur d'onde, le tout étant suspendu, c'est-à-dire non déposé sur un substrat sauf en des zones où l'on ne recherche pas la fonctionnalité de filtrage spectral. Par exemple, l'ensemble film métallique et couche diélectrique est suspendu sur le pourtour d'un orifice formé dans un substrat (non représenté sur la figure 1A). En utilisation, la structure est donc immergée dans le milieu ambiant (vide ou fluide quelconque). La couche 102 est en matériau diélectrique transparent dans la bande spectrale que l'on cherche à transmettre, par exemple en nitrure de silicium ou carbure de silicium. D'autres matériaux peuvent être utilisés comme par exemple l'oxyde de silicium, le fluorure d'yttrium, le sulfure de zinc, l'oxyde d'aluminium ou de magnésium. Le film métallique est par exemple en or, aluminium, cuivre, tungstène, nickel, platine ou argent, le choix du métal pouvant se faire afin de minimiser l'absorption dans la gamme spectrale d'utilisation. Le motif élémentaire 103 qui est répété de façon périodique ou quasi-périodique (c'est-à-dire avec une période à variation lente) peut comprendre une ou plusieurs fentes étroites s'étirant de part en part du motif. Le réseau peut comprendre un ensemble de fentes parallèles (cas par exemple de la figure 2A) ou deux ou plus ensembles de fentes parallèles (cas par exemple des figures 2B et 2C pour deux ensembles de fentes).

Le principe du filtre repose sur le confinement d'une onde incidente 1 (figure 1A) dans la couche diélectrique 102 qui sert de guide d'onde, puis sur sa transmission dans l'espace de sortie (onde de sortie référencée 7 sur la figure 1A). Le piégeage puis la transmission sont obtenus grâce à la structure diffractante métallique 101 déposée sur l'une des faces du guide d'onde 102, ladite structure étant par ailleurs adaptée pour le contrôle de la polarisation comme cela sera décrit par la suite. Plus précisément, les photons incidents (symbolisés par la flèche 1) sont transmis dans la couche 102 en matériau diélectrique par diffraction à travers le réseau métallique 101. Cette diffraction peut se faire à l'ordre 0, $\pm 1$, etc. Les déposants ont montré qu'en choisissant les paramètres optogéométriques de la structure diffractante de telle sorte que dans la gamme spectrale du filtre, seuls les ordres 0 et $\pm 1$ d'une onde à incidence normale soient diffractés, on pouvait obtenir une excellente sélectivité. En effet, tandis que les photons diffractés à l'ordre 0 (symbolisés par la flèche 2), à incidence normale par rapport au plan du guide d'onde, sont partiellement transmis en dehors de la couche diélectrique (flèche 7) et partiellement réfléchis toujours à incidence normale (6, 8) pour être à nouveau diffractés sous le réseau (flèches 9, 10), les ordres $\pm 1$ (indiqués par les flèches 3, 4) sont guidés dans la couche 102, notamment par réflexion totale (flèche 5), et ne peuvent ressortir que par diffraction sous le réseau (flèches 11, 12). Grâce aux interférences constructives des photons émergents 7, des pics de transmission apparaissent pour certaines longueurs d'onde. Typiquement, pour limiter la diffraction et la propagation des ordres 0 et $\pm 1$, la période d de la structure diffractante peut être choisie telle que d < $\lambda_0$ < ng d, où $\lambda_0$ est la longueur d'onde centrale de la bande spectrale que l'on cherche à filtrer, typiquement entre 0,850 $\mu$m et 30 $\mu$m pour les applications proche infrarouge et infrarouge, et ng est l'indice du matériau en diélectrique mesuré à cette longueur d'onde. Par ailleurs, l'ensemble réseau métallique et couche diélectrique étant suspendu, c'est-à-dire immergé en utilisation dans un milieu ambiant, par exemple le vide ou un autre fluide d'indice proche de 1, le choix du matériau diélectrique pour obtenir la condition de réflexion totale à l'interface diélectrique / milieu ambiant est facilité et les réflexions parasites liées à la présence d'un substrat éliminées, permettant de rendre maximale le flux lumineux émis dans l'espace libre.

Selon une variante illustrée par l'exemple de la figure 1B, la couche en matériau diélectrique peut être structurée selon un motif similaire à celui des fentes formant le réseau (d'un côté et/ou de l'autre de la couche en diélectrique). Les déposants ont montré qu'une efficacité accrue était obtenue.

Les déposants ont par ailleurs montré qu'en choisissant à la fois une épaisseur du réseau métallique suffisamment grande et des fentes suffisamment étroites, seule la polarisation TM (champ magnétique parallèle aux fentes) pouvait être transmise dans la couche mince puis dans l'espace libre, permettant un parfait contrôle de la polarisation une fois ajustée l'orientation des ensembles de fentes parallèles. Typiquement, en choisissant une épaisseur t du réseau tel que t > $\lambda_0$/50 et une largeur w des fentes telle que w < $\lambda_0$/10, Les déposants ont montré qu'on pouvait obtenir une transmission polarisée TE résiduelle (champ électrique parallèle aux fentes) inférieure à 5% de la lumière incidente dans un dispositif de filtrage passe bande tel que décrit précédemment.

Avantageusement, l'épaisseur t du réseau est choisie inférieure à $\lambda_0$/10 pour éviter de possibles phénomènes de résonances verticales dans les fentes du réseau qui auraient un effet perturbateur sur la transmission globale du filtre.

Les figures 2A à 2C représentent trois exemples de mise en oeuvre pour obtenir des filtres passe-bande à polarisation contrôlée.

La structure de la figure 2A est dite « configuration à une dimension polarisante ». Dans cet exemple, la structure diffractive métallique est formée d'un ensemble de fentes parallèles très fines, permettant de polariser l'onde transmise en mode TM. Ainsi, pour une onde incidente polychromatique et non polarisée, formée d'une combinaison de photons incidents polarisés TM (champ magnétique perpendiculaire au plan de coupe de la figure) et de photons polarisés TE (champ électrique perpendiculaire au plan de coupe de la figure), seuls les photons polarisés TM à la longueur d'onde centrale $\lambda_0$ sont transmis par le filtre. Cette configuration peut permettre en plus de la fonction de filtrage, une analyse de la polarisation de l'onde incidente, par exemple en prévoyant des moyens de rotation du filtre ou en disposant un ensemble de filtres présentant des réseaux dont les fentes ne sont pas orientées dans la même direction, par exemple sous la forme d'une matrice multispectrale telle qu'elle sera décrite dans la suite Si l'onde incidente comprend une composante avec une polarisation linéaire majoritaire, ce qui est par exemple le cas d'un rayonnement infrarouge émis ou réfléchi par un objet artificiel (de type véhicule ou bâtiment par exemple), le signal mesuré en sortie du filtre sera variable avec la position du filtre ou selon le filtre dans le cas d'une matrice multispectrale. Si l'onde incidente est purement non polarisée (typiquement cas d'un rayonnement infrarouge émis par un objet naturel, type végétation), le signal en sortie du filtre sera constant quelle que soit la position du filtre ou quel que soit le filtre dans le cas d'une matrice multispectrale. Il est donc ainsi possible de faire de l'analyse de la polarisation d'une scène.

Selon une variante, les fentes sont espacées de façon quasi-périodique, c'est-à-dire avec une période à variation lente. En effet, il apparaît que la fonction de filtrage est efficace lorsque le nombre de répétitions des fentes est au moins égal au facteur de qualité du filtre, défini comme le rapport de la longueur d'onde centrale de transmission par la largeur spectrale à mi-hauteur. Ainsi typiquement, pour un filtre adapté à la transmission à 6 μm et une largeur spectrale à mi-hauteur de 0,2 μm, on cherchera à disposer selon la direction de périodicité au moins trente fentes. Les déposants ont montré que si la période varie lentement, c'est-à-dire d'une valeur inférieure sensiblement à la largeur spectrale à mi-hauteur pour un nombre de fentes sensiblement égal au facteur de qualité, on pouvait conserver la fonction de filtrage tout en faisant glisser la longueur d'onde de transmission. Par exemple, la variation de la période peut être une fonction linéaire de la distance, selon la direction de périodicité du motif Il est alors possible de réaliser par exemple pour une fonction de spectro-imageur, un filtre dont la longueur d'onde de transmission $\lambda_0$ varie continûment d'une extrémité à l'autre du filtre, couvrant toute une gamme spectrale.

La structure de la figure 2B est dite « configuration à deux dimensions non polarisante ». Dans cet exemple au contraire, le filtre passe bande est rendu purement non polarisant grâce à une structure diffractante parfaitement symétrique. Ainsi les photons incidents à la longueur d'onde $\lambda_0$ sont transmis quelle que soit leur polarisation. Pour ce faire, les fentes de la structure diffractive sont croisées, formant deux ensembles de fentes agencées selon deux directions avantageusement perpendiculaires, et la période est identique selon les deux directions. L'insensibilité à la polarisation dans cet exemple résulte comme précédemment des conditions d'épaisseur du réseau métallique et de finesse des fentes, permettant dans chacune des directions, un parfait contrôle de la polarisation. Une telle structure permet notamment de transmettre la quasi totalité du flux incident, ce qui peut être un paramètre important dans le cas d'une application à la détection, lorsqu'on recherche à rendre le signal de détection maximal.

La structure de la figure 2C est dite « configuration à deux dimensions polarisante ». Comme dans l'exemple de la figure 2B, les fentes sont croisées et les conditions d'épaisseur du réseau et de finesse des fentes sont respectées pour avoir selon chacune des directions un parfait contrôle de la polarisation. Dans cet exemple cependant, les périodes selon l'une et l'autre des directions sont différentes (respectivement $d_1$ et $d_2$) permettant une fonction de filtrage selon deux bandes spectrales respectivement centrées sur des longueurs d'onde $\lambda_{01}$ et $\lambda_{02}$ distinctes. Ainsi, le filtre obtenu est polarisant et la longueur d'onde filtrée dépend de la polarisation. En effet, seuls les photons incidents polarisés TM (champ magnétique perpendiculaire au plan de coupe de la figure) et présentant une longueur d'onde proche de $\lambda_{01}$ seront transmis par le filtre ainsi que les photons incidents polarisés TE (champ électrique perpendiculaire au plan de la figure) et présentant une longueur d'onde proche de $\lambda_{02}$. Un filtrage ajustable en longueur d'onde peut par exemple être réalisé en sélectionnant la polarisation de l'onde incidente, comme cela sera décrit par la suite. Des applications d'analyse de la polarisation sont également possibles comme celles décrites dans le cas du filtre à une dimension polarisant.

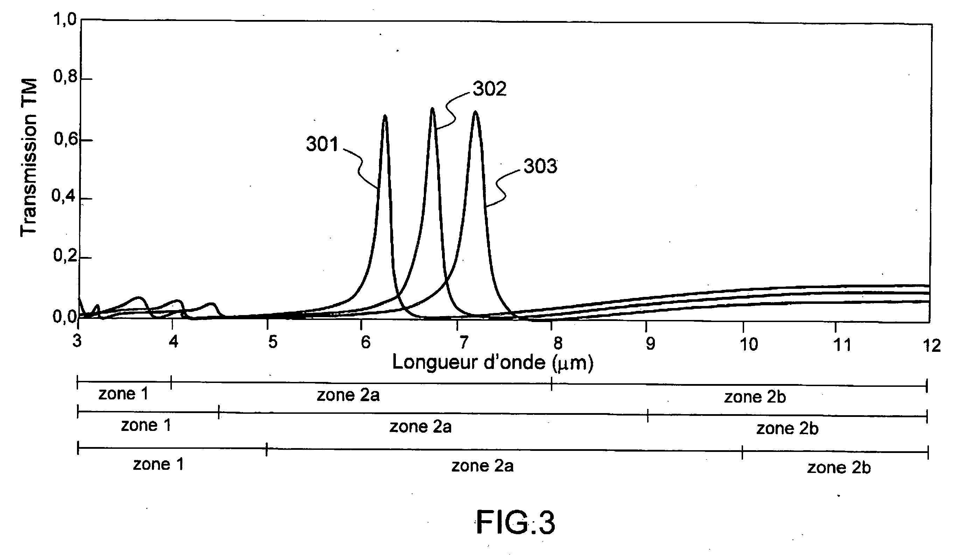

La figure 3 illustre les réponses spectrales en transmission d'un filtre du type de la figure 2A, calculées pour différentes valeurs de la période d et de la largeur des fentes w. Le filtre est formé d'un guide d'onde d'épaisseur h et d'indice optique $n_g$ supposé égal à 2 sur lequel un film métallique d'indice optique égal à celui de l'or (voir « Handbooks of optical constants of solids », ED Palik, 1985) est déposé et perforé périodiquement selon une seule direction par des fentes. Les calculs sont effectués en utilisant le logiciel Reticolo, développé par J. P. Hugonin and P. Lalanne (« Reticolo software for grating analysis », Institut d'Optique, Orsay, France (2005)), et basé sur la théorie des ondes couplées (ou RCWA selon l'abréviation de l'expression anglo-saxonne « Rigorous Coupled Wave Analysis »). La figure 3 présente trois spectres en transmission, référencés respectivement 301, 302 et 303, calculés sous incidence normale en polarisation TM pour des longueurs de l'onde incidente variant entre 3 μm et 12 μm, pour trois structures de géométrie différente. L'épaisseur de la couche mince en diélectrique est h = 1,3 μm et l'épaisseur du réseau t = 0,2 μm pour les trois géométries. Le motif élémentaire est formé par une fente de largeur w égale à 0,25 μm, 0,3 μm et 0,35 μm respectivement pour les

courbes 301, 302, 303. La période de répétition du motif est d = 4 μm, 4,5 μm, 5 μm respectivement pour les courbes 301, 302, 303. Les simulations montrent une valeur de transmission proche de 0,7 avec une longueur d'onde centrale, correspondant à la valeur de la longueur d'onde pour laquelle la transmission est maximale, qui se déplace de 6,225 μm (courbe 301), à 6,725 μm (courbe 302) et à 7,065 μm (courbe 303). La largeur du pic à mi-hauteur varie de 140 nm (courbe 301), à 185 nm (courbe 302) et à 230 nm (courbe 303). En référence à la figure 1A et à la description du principe physique, on peut expliquer l'allure de ces spectres en divisant la bande spectrale sur une échelle avec trois zones (zone 1, zone 2a et zone 2b). Sur la figure 3, l'échelle supérieure correspond à la courbe 301 (d = 4 μm, w = 0,25 μm), l'échelle du milieu correspond à la courbe 302 (d = 4,5 μm, w= 0,3 μm) et l'échelle inférieure correspond à la courbe 303 (d = 5 μm, w = 0,35 μm). La zone 1 correspond à la plage des longueurs d'onde inférieures à la période ($\lambda < d$). Pour cette plage, la structure diffracte plusieurs ordres et l'intensité dans l'ordre 0 est faible. La zone 2 se subdivise en deux zones (zone 2a et zone 2b) de part et d'autre d'une longueur d'onde critique $\lambda_c$ dont l'expression est donnée par la loi des réseaux. Sous incidence normale, $\lambda_c$ = ng d, où $n_g$ est l'indice du matériau diélectrique formant le guide d'onde (pour les calculs sur les réseaux voir par exemple J.D. Jackson, « Electrodynamique classique - 3ème édition », Dunod (2001)). Dans la zone 2a ($\lambda < \lambda_c$), le réseau diffracte dans le diélectrique les ordres 0 et $\pm 1$. Comme cela a été expliqué en référence à la figure 1A, les ondes diffractées selon l'ordre $\pm 1$ sont guidées et ne sortent du guide qu'à condition d'être à nouveau sous incidence normale. Cela se produit lors de la diffraction à la réflexion sous le réseau. Pour certaines longueurs d'onde, les ondes interfèrent constructivement formant ainsi le pic de transmission à la longueur d'onde centrale $\lambda_0$ dont on montre qu'elle est fortement liée à la période du réseau. Dans la zone 2b ($\lambda > \lambda_c$), il n'y a diffraction dans le guide d'onde que de l'ordre 0. Il n'y a donc pas de piégeage par guide d'onde, empêchant une transmission importante.

Dans l'exemple de la figure 3, l'épaisseur et l'indice de la couche diélectrique sont tels qu'il n'y a qu'un seul mode guidé dans la zone spectrale du filtre, permettant une très bonne sélectivité autour d'une longueur d'onde centrale unique. Cette propriété est vérifiée si la condition :

$$h < \frac{\lambda}{2\sqrt{n_g^2 - n_{ext}^2}}$$

est vérifiée, où h est l'épaisseur de la couche de diélectrique, ng l'indice du guide et $n_{ext}$ l'indice de réfraction du milieu ambiant. Cela résulte dans une réponse spectrale en transmission présentant un seul pic.

En augmentant l'épaisseur de la couche en diélectrique, on autorise au contraire la propagation de plusieurs modes guidés et donc la possibilité de plusieurs pics de transmission.

Dans l'exemple ci-dessus décrit, du fait de l'épaisseur du réseau métallique et de la finesse des fentes, seule la polarisation TM peut être transmise. Par ailleurs, le piégeage dans le guide dans une telle structure est particulièrement efficace du fait de la nature métallique du réseau et de la finesse des fentes. La polarisation TE est quant à elle très majoritairement réfléchie, quelle que soit la longueur d'onde. Ces spectres peuvent être généralisés à une onde incidente non polarisée pour une structure ayant des fentes croisées (« configuration à deux dimensions non polarisante », du type de la figure 2B). Les différentes géométries peuvent être combinées dans l'une ou l'autre direction du plan de la structure pour obtenir une configuration à deux dimensions polarisante (figure 2C). Ainsi, la déposante a montré que les propriétés des photons piégés dans le guide (longueur d'onde, polarisation) sont directement liées aux paramètres optogéométriques de la structure tels que l'épaisseur et la nature du film métallique, la forme, la dimension et la périodicité des performations, l'épaisseur et la nature du guide d'onde. Les caractéristiques spectrales du filtre passe bande selon l'invention peuvent donc être ajustés en faisant varier les paramètres ci-dessus.

Les courbes calculées dans l'exemple décrit à la figure 3 font l'hypothèse d'une onde incidente à incidence normale. Selon une variante, il est possible de travailler avec une incidence non nulle, ce qui aura pour effet de déplacer le pic de transmission si l'angle d'incidence défini par rapport à la normale au plan du réseau reste faible, les conditions d'interférence constructives n'étant plus les mêmes. Si l'angle d'incidence augmente, on observera un dédoublement du pic de transmission, au détriment de la sélectivité du filtre.

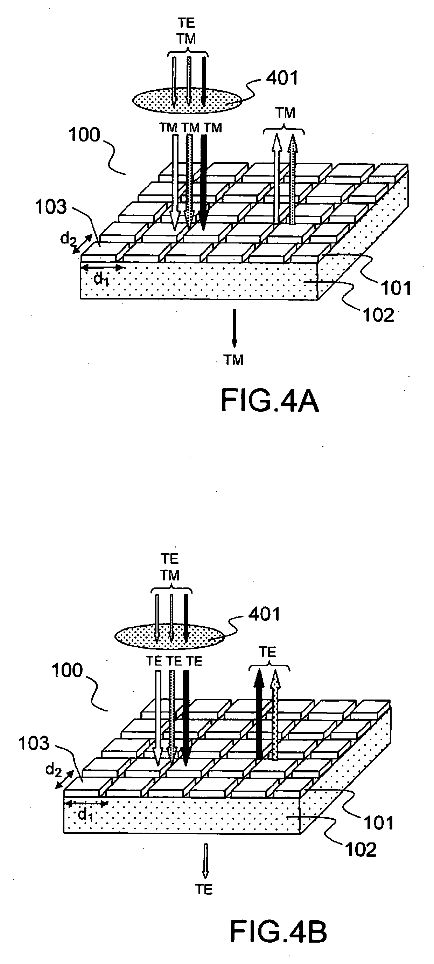

Les figures 4A et 4B montrent un exemple d'application d'un filtre passe bande du type de la figure 2C. Il s'agit d'un dispositif de filtrage comprenant un filtre passe bande 100 du type de la figure 2C , c'est-à-dire une configuration à deux dimensions polarisante, les fentes étant agencées selon une première et une seconde direction avec des périodes $d_1$ et $d_2$ différentes. Dans l'exemple de la figure 4A il est prévu un polariseur 401 permettant de polariser en mode TM une onde incidente sur le filtre (champ magnétique perpendiculaire au plan de coupe de la figure). La fenêtre spectrale transmise est donc centrée sur $\lambda_{01}$ correspondant au réseau de période $d_1$. Dans l'exemple de la figure 4B, le polariseur 401 est adapté pour polariser en mode TE l'onde incidente sur le filtre (champ électrique perpendiculaire au plan de la figure). La fenêtre spectrale transmise est alors centrée sur $\lambda_{02}$ correspondant au réseau de période $d_2$. Il est donc possible avec un tel dispositif de sélectionner l'une ou l'autre des fenêtres spectrales en sélectionnant la polarisation.

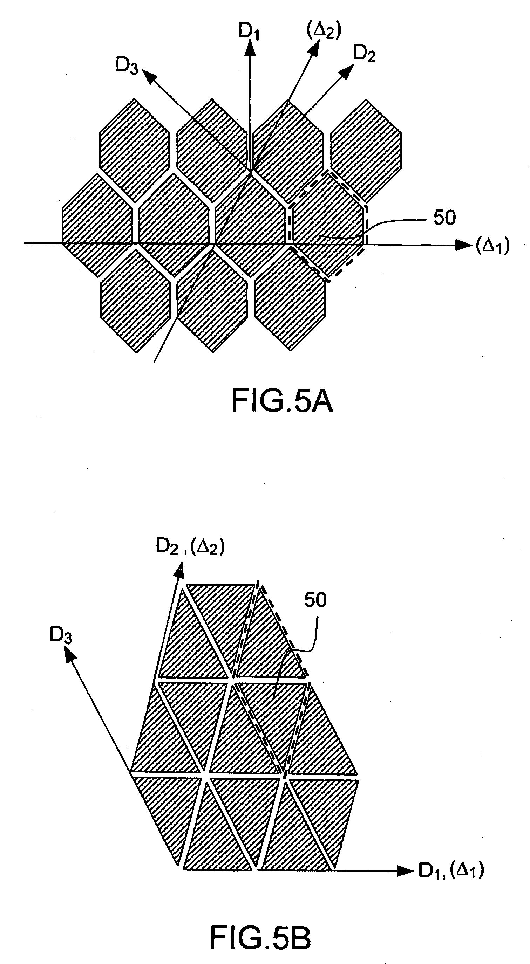

Les figures 5A et 5B illustrent deux exemples de réalisation de filtres spectraux selon l'invention dans lesquels les réseaux comprennent une pluralité d'ensembles de fentes, sensiblement identiques, parallèles, les fentes de chacun des ensembles de fentes étant agencées selon trois directions différentes ($D_1$, $D_2$, $D_3$) pour former un motif 50 hexagonal (figure 5A) ou en forme de parallélogramme (figure 5B) répété selon deux directions $\Delta_1$, $\Delta_2$. Le motif est répété de façon périodique ou quasi-périodique selon chacune des directions $\Delta_1$, $\Delta_2$. Un avantage de cette structure est de limiter l'effet de l'incidence de l'onde sur le filtre tout en conservant une sensibilité faible à la polarisation.

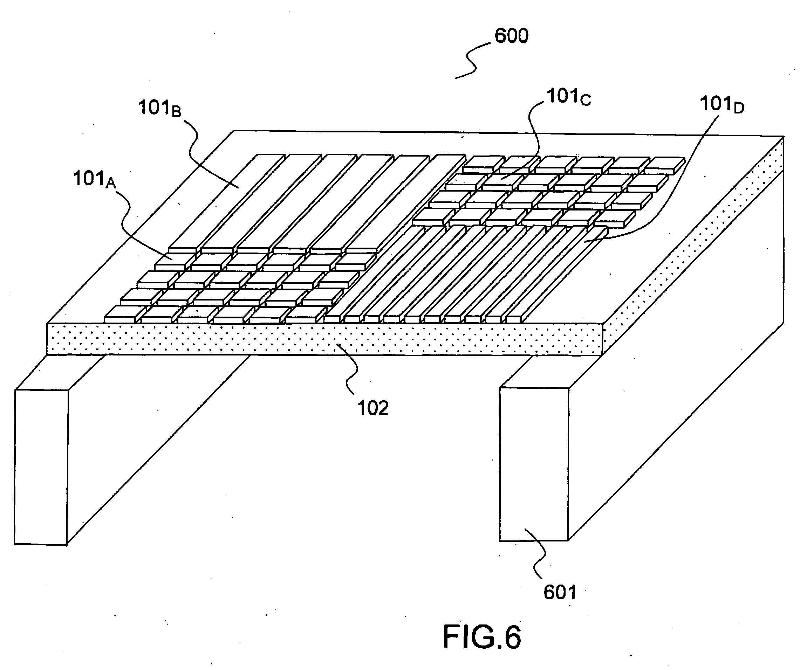

La figure 6 montre un exemple de réalisation d'un dispositif de filtrage comprenant plusieurs filtres passe bande formant une mosaïque de filtres, ou matrice multispectrale L'ensemble couche diélectrique 602 et réseaux métalliques référencés $101_A$ à $101_D$ des filtres est suspendu sur le pourtour d'un orifice formé dans un même substrat 601 par exemple en silice. Dans cet exemple, la mosaïque comprend des filtres à une dimension polarisants ($101_B$, $101_D$) avec des périodes différentes et donc des longueurs d'onde de filtrage différentes ainsi que des filtres à deux dimensions polarisant ou non polarisant ($101_A$, $101_C$). Ce type de dispositif, intégré dans un système d'imagerie, permet par exemple des applications d'imagerie ou de spectrométrie, ou d'analyse de la polarisation. Par ailleurs, la mosaïque de filtres ainsi obtenue ne présente pas de surépaisseur d'un filtre à l'autre, comme cela aurait été le cas pour une mosaïque de filtres interférentiels par exemple, la longueur d'onde centrale de filtrage résultant des paramètres optogéométriques du réseau et non d'un empilement plus ou moins important de couches.

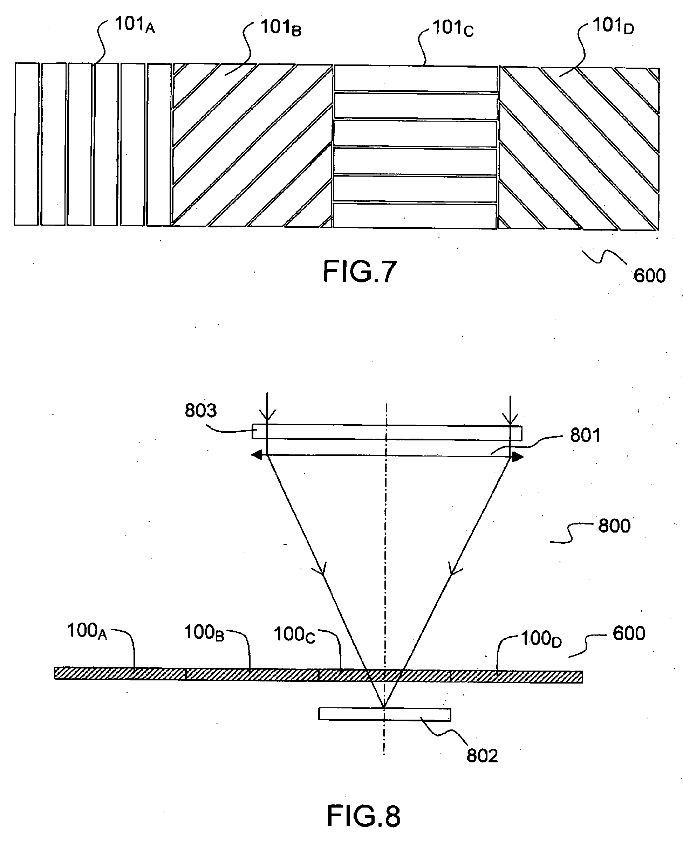

La figure 7 représente une vue de dessus d'une matrice multispectrale 600 selon un exemple de réalisation. Dans cet exemple, la matrice comprend un ensemble de filtres dont les réseaux $101_A$ à $101_D$ comprennent chacun un unique ensemble de fentes parallèles, de période identique, mais dont l'orientation des fentes varie d'un filtre à l'autre, par exemple 0°, 30°, 60°, 90°. Cette matrice permet par exemple une analyse de la polarisation d'une scène, en prévoyant des moyens pour la déplacer devant le dispositif de détection.

Un dispositif de filtrage selon l'invention peut être fabriqué par différents procédés. Avantageusement, il est réalisé en adaptant le procédé décrit dans G. Vincent et al., « Large-area dielectric and metallic freestanding gratings for midinfrared optical filtering applications », J.Vac.Sci.Technol. B 26, 1852 (2008) permettant la réalisation de structures suspendues. Un substrat en silicium par exemple en silicium poli double face avec orientation cristalline 100 est sélectionné puis est déposée sur une des faces du substrat (« face arrière ») une couche de silice (typiquement 500 nm) par exemple par PECVD (Plasma Enhanced Chemical Vapor Deposition) ou par pulvérisation. Sur l'autre face du substrat (« face avant »), une couche mince en diélectrique est déposée pour former le guide d'onde (il s'agit par exemple d'une couche en nitrure de silicium déposée par PECVD). Une étape d'ajustement des contraintes mécaniques dans la couche mince formant le guide d'onde peut être réalisée en procédant à des recuits (typiquement, une heure à 400°C pour le nitrure déposé par PECVD). Le réseau métallique est alors déposé sur le guide d'onde. Cette étape comprend par exemple le dépôt d'une résine sensible au rayonnement UV (par exemple AZ5214 de MicroChemicals) ou aux électrons (par exemple en PMMA), la lithographie UV ou électronique du motif désiré (réseau de fentes 1D ou 2D, etc.), le développement de la résine insolée, le dépôt de métal, par exemple de l'or, selon l'épaisseur désirée, et finalement le lift-off (enlèvement de la résine et du métal non désiré) dans un solvant adapté par exemple acétone pour la résine AZ5214 ou trichloréthylène pour le PMMA). Selon une variante, une technologie de nano impression (ou 'nanoimprint') peut également être utilisée pour former le réseau métallique à la place de la lithographie électronique par exemple, la technologie de nano impression pouvant se faire à moindre coût. La membrane suspendue est ensuite obtenue par dépôt sur la face arrière d'une résine sensible au rayonnement UV (par exemple AZ5214) ou aux électrons (par exemple PMMA), la lithographie UV ou électronique du motif désiré (ouverture carrée, rectangulaire, etc...) en prenant garde d'être aligné avec le motif de la face avant, le développement de la résine insolée, la gravure de la silice laissée libre après développement, et ce à l'aide d'une solution à base d'acide fluorhydrique (sur cette zone la silice laisse place au silicium), le retrait de la résine par un solvant adapté, le passage de l'échantillon dans une solution de TMAH (hydroxyde de tétraméthylammonium) afin de graver le substrat de silicium.

Selon une variante, dans le cas où la couche diélectrique est structurée (telle que c'est illustré par exemple sur la figure 1B), il est ensuite procédé à la gravure de ladite couche, par exemple par gravure par plasma.

Le procédé ainsi décrit permet de réaliser un filtre passe bande unique, ou une mosaïque de filtres telle que décrite par exemple sur la figure 6. Les filtres de la mosaïque peuvent alors être réalisés par le procédé décrit sur un même substrat, aussi simplement et sans surcoût notable par rapport à un filtre unique, seule l'étape de définition du motif du réseau étant modifiée.

La figure 8 représente de façon schématique un système optronique de détection mettant en oeuvre un filtre spectral ou une matrice multispectrale 600 telle que décrite précédemment, et comprenant un ensemble de filtre spectraux référencés $100_A$ à $100_D$, les filtres étant utilisés en transmission. Le système comprend généralement un objectif 801 et un détecteur 802 adapté à la bande spectrale d'intérêt. La matrice 600 est positionnée devant le détecteur et des moyens (non représentés) peuvent être prévus pour la déplacer, permettant ainsi de travailler avec l'un ou l'autre des filtres, par exemple dans une application d'analyse de la polarisation. Selon une variante, un polariseur 803 est agencé dans le système pour sélectionner une polarisation et sélectionner ainsi une longueur d'onde centrale de transmission comme cela a été précédemment décrit par exemple dans l'exemple des figures 4A, 4B. Alternativement, le système optique peut comprendre une juxtaposition d'objectifs, chacun d'entre eux faisant face à un filtre de la matrice 600 et à une zone d'une matrice de détection 802 de dimensions supérieures à celle représentée sur la figure 8. Selon cette variante, la matrice 600 reste fixe dans le système.

Bien que décrite à travers un certain nombre d'exemples de réalisation détaillés, la structure et la méthode de réalisation du filtre spectral selon l'invention comprend différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

**Revendications**

1. Filtre spectral passe bande (100), optimisé pour la transmission d'une onde incidente à au moins une première longueur d'onde centrale $\lambda_0$ donnée, **caractérisé en ce qu'**il comprend :

   - un réseau métallique (101) d'épaisseur (t) supérieure à environ $\lambda_0/50$ et comprenant au moins un premier ensemble de fentes sensiblement identiques, parallèles, de largeur (w) inférieure à environ $\lambda_0 / 10$, espacées de façon périodique ou quasi-périodique selon une première période (d, $d_1$) inférieure à ladite première longueur d'onde centrale,
   - une couche en matériau diélectrique (102) d'épaisseur (h) et d'indice de réfraction ($n_g$) donnés, couplée avec le réseau métallique pour former un guide d'onde des ondes diffractées par le réseau, ladite première période du réseau étant adaptée pour que seuls les ordres 0 et $\pm 1$ d'une onde à incidence normale et longueur d'onde $\lambda_0$ soient diffractés dans la couche de matériau diélectrique, l'ensemble couche diélectrique et réseau étant suspendu dans un fluide d'indice de réfraction proche de 1.

2. Filtre spectral selon la revendication 1, dans lequel le réseau métallique comprend un deuxième ensemble de fentes, sensiblement identiques, parallèles, espacées de façon périodique ou quasi-périodique selon une deuxième période ($d_2$), les fentes du deuxième ensemble de fentes étant agencées selon une direction différente de celle des fentes du premier ensemble.

3. Filtre spectral selon la revendication 2, dans lequel la largeur des fentes du deuxième ensemble de fentes est sensiblement identique à celle des fentes du premier ensemble de fentes et les deux périodes sont identiques.

4. Filtre spectral selon la revendication 2, optimisé pour le filtrage d'une onde incidente à au moins une première et une seconde longueurs d'onde centrales $\lambda_{01}$ et $\lambda_{02}$, dans lequel les deux périodes sont différentes, inférieures aux première et seconde longueurs d'onde respectivement, la période selon chacune des dimensions étant adaptée pour que seuls les ordres 0 et 1 d'une onde à incidence normale et longueur d'onde $\lambda_{01}$ ou $\lambda_{02}$ respectivement soient diffractés dans la couche de matériau diélectrique.

5. Filtre spectral selon l'une quelconque des revendications 2 à 4, dans lequel les fentes desdits premier et second ensembles de fentes sont perpendiculaires.

6. Filtre spectral selon la revendication 1, dans lequel le réseau métallique comprend une pluralité d'ensembles de fentes, sensiblement identiques, parallèles, espacées de façon périodique ou quasi-périodique, les fentes de chacun des ensembles de fentes étant agencées selon des directions ($D_1$, $D_2$, $D_3$) différentes pour former un motif (50) répété selon deux directions ($\Delta_1$, $\Delta_2$).

7. Filtre spectral selon la revendication 1, dans lequel ledit motif (50) est hexagonal ou en forme de parallélogramme.

8. Filtre spectral selon l'une quelconque des revendications précédentes, dans lequel la couche en matériau diélectrique (102) est structurée selon un motif sensiblement similaire à celui formé parmi les fentes du réseau.

9. Filtre spectral selon l'une quelconque des revendications précédentes, dans lequel l'épaisseur (h) de la couche diélectrique est suffisamment fine pour ne laisser qu'un seul mode guidé dans la couche diélectrique à ladite au moins une première longueur d'onde centrale.

10. Filtre spectral selon l'une quelconque des revendications 1 à 8, dans lequel l'épaisseur de la couche diélectrique est suffisamment épaisse pour permettre la propagation de plusieurs modes guidés dans la couche diélectrique.

11. Filtre spectral selon l'une quelconque des revendications précédentes, dans lequel le matériau formant la couche diélectrique comprend un des matériaux choisis parmi le nitrure de silicium, le carbure de silicium, l'oxyde de silicium, le fluorure d'yttrium, le sulfure de zinc, l'oxyde d'aluminium ou de magnésium.

**12.** Filtre spectral selon l'une quelconque des revendications précédentes, dans lequel le matériau formant le réseau comprend un des métaux choisis parmi l'or, l'aluminium, le cuivre, le tungstène, le nickel, le platine, l'argent.

**13.** Filtre spectral selon l'une quelconque des revendications précédentes, dans lequel ladite au moins première longueur d'onde centrale est comprise entre sensiblement 0,850 $\mu$m et 30 $\mu$m.

**14.** Filtre spectral selon l'une quelconque des revendications précédentes comprenant en outre un substrat, l'ensemble couche diélectrique et réseau métallique étant suspendu sur le pourtour d'un orifice formé dans ledit substrat.

**15.** Matrice multispectrale (600) comprenant un ensemble de filtres spectraux selon l'une quelconque des revendications 1 à 13, les réseaux (101$_A$, 101$_B$, 101$_C$, 101$_D$) desdits filtres spectraux étant couplés avec la même couche (102) en matériau diélectrique, l'ensemble couche diélectrique et réseaux métalliques des filtres étant suspendu sur le pourtour d'un orifice formé dans un même substrat (601).

**16.** Système optronique (800) de détection proche infrarouge ou infrarouge comprenant un détecteur (802) et un filtre spectral selon la revendication 14 ou une matrice multispectrale (600) selon la revendication 15.

**17.** Système optronique de détection selon la revendication 16, comprenant en outre un polariseur (803) permettant de polariser une onde incidente selon une direction parallèle à l'une des directions des fentes du ou d'au moins un des réseau(x) métallique(s) du ou des filtre(s).

**18.** Méthode de fabrication d'un filtre spectral selon la revendication 14 ou d'une matrice multispectrale selon la revendication 15 comprenant :

- le dépôt sur une des faces d'un substrat d'une couche de silice et sur l'autre face du substrat d'une couche mince en diélectrique pour former le guide d'onde,
- le dépôt du ou des réseau(x) métallique(s) sur ladite couche en matériau diélectrique selon un motif donné,
- la gravure de la silice en face arrière du substrat selon un motif défini par lithographie UV ou électronique, aligné avec le motif du ou des réseau(x) formé(s) en face avant, puis la gravure du substrat en silicium de part en part, selon le précédent motif, afin d'obtenir une membrane suspendue formée de la couche en diélectrique et du ou des réseau(x).

**19.** Méthode de fabrication selon la revendication 18, dans laquelle le dépôt du ou des réseau(x) métallique(s) est obtenu après lithographie UV ou électronique.

**20.** Méthode de fabrication selon la revendication 18, dans laquelle le dépôt du ou des réseau(x) métallique(s) est obtenu après nano-impression.

**Patentansprüche**

**1.** Spektralbandfilter (100), das zur Übertragung einer einfallenden Welle mit mindestens einer ersten gegebenen zentralen Wellenlänge $\lambda_0$ optimiert ist, **dadurch gekennzeichnet, dass** es Folgendes umfasst:

- ein Metallgitter (101) mit einer Dicke (t), die höher als ungefähr $\lambda_0$ / 50 ist und mindestens eine erste Einheit von im Wesentlichen identischen, parallelen Schlitzen mit einer Breite ($\omega$), die kleiner als ungefähr $\lambda_0$ / 10 ist, umfasst, die periodisch oder quasiperiodisch gemäß einer ersten Periode (d, $d_1$), die kleiner als die besagte erste zentrale Wellenlänge ist, beabstandet sind,
- eine Schicht aus dielektrischem Material (102) mit einer gegebenen Dicke (h) und einem gegebenen Brechungsindex (ng), die mit dem Metallgitter gekoppelt ist, um einen Wellenleiter für von dem Gitter gebeugten Wellen zu bilden, wobei die besagte erste Periode des Gitters dazu eingerichtet ist, nur die Größenordnungen 0 und $\pm 1$ einer Welle mit normalem Einfall und die Wellenlänge $\lambda_0$ in der Schicht aus dielektrischem Material gebeugt werden, wobei die Einheit aus dielektrischer Schicht und Gitter in einem Fluid mit einem Brechungsindex nahe 1 hängt.

**2.** Spektralfilter nach Anspruch 1, wobei das Metallgitter eine zweite Einheit von im Wesentlichen identischen, parallelen Schlitzen umfasst, die periodisch oder quasiperiodisch gemäß einer zweiten Periode ($d_2$) beabstandet sind, wobei die Schlitze der zweiten Einheit von Schlitzen gemäß einer Richtung angeordnet sind, die sich von der von Schlitzen der ersten Einheit unterscheidet.

**3.** Spektralfilter nach Anspruch 2, wobei die Schlitzbreite der zweiten Einheit von Schlitzen im Wesentlichen identisch mit der Schlitzbreite der ersten Einheit von Schlitzen ist und die zwei Perioden identisch sind.

4. Spektralfilter nach Anspruch 2, das zur Filterung einer einfallenden Welle mit mindestens einer ersten und einer zweiten zentralen Wellenlänge $\lambda_{01}$ und $\lambda_{02}$ optimiert ist, wobei die zwei Perioden unterschiedlich und kleiner als die erste und bzw. die zweite Wellenlänge sind, wobei die Periode gemäß jeder der Dimensionen dazu eingerichtet ist, nur die Größenordnungen 0 und 1 einer Welle mit normalem Einfall und die Wellenlänge $\lambda_{01}$ bzw. $\lambda_{02}$ in der Schicht aus dielektrischem Material zu beugen.

5. Spektralfilter nach einem der Ansprüche 2 bis 4, wobei die Schlitze der besagten ersten und der besagten zweiten Einheit von Schlitzen senkrecht zueinander sind.

6. Spektralfilter nach Anspruch 1, wobei das Metallgitter eine Vielzahl von Sätzen von im Wesentlichen identischen, parallelen Schlitzen umfassen, die periodisch oder quasiperiodisch beabstandet sind, wobei die Schlitze jedes der Sätze von Schlitzen gemäß unterschiedlichen Richtungen ($D_1$, $D_2$, $D_3$) angeordnet sind, um ein Muster (50) zu bilden, das gemäß zwei Richtungen ($\Delta_1$, $\Delta_2$) wiederholt wird.

7. Spektralfilter nach Anspruch 1, wobei das besagte Muster (50) hexagonal oder in der Form eines Parallelogramms ist.

8. Spektralfilter nach einem der vorhergehenden Ansprüche, wobei die Schicht aus dielektrischem Material (102) gemäß einem Muster strukturiert ist, das dem aus den Schlitzen des Gitters gebildeten im Wesentlichen ähnlich ist.

9. Spektralfilter nach einem der vorhergehenden Ansprüche, wobei die Dicke (h) der dielektrischen Schicht ausreichend dünn ist, um nur einen einzigen geführten Modus in der dielektrischen Schicht mit der besagten mindestens einen ersten zentralen Wellenlänge zuzulassen.

10. Spektralfilter nach einem der Ansprüche 1 bis 8, wobei die Dicke der dielektrischen Schicht ausreichend dick ist, um die Ausbreitung von mehreren geführten Modi in der dielektrischen Schicht zu ermöglichen.

11. Spektralfilter nach einem der vorhergehenden Ansprüche, wobei das Material, das die dielektrische Schicht bildet, eines der Materialien umfasst, die aus Siliziumnitrid, Siliziumkarbid, Siliziumoxid, Yttriumfluorid, Zinksulfid, Aluminiumoxid oder Magnesiumoxid ausgewählt sind.

12. Spektralfilter nach einem der vorhergehenden Ansprüche, wobei das Material, das das Gitter bildet, eines der Metalle umfasst, die aus Gold, Aluminium, Kupfer, Wolfram, Nickel, Platin und Silber ausgewählt sind.

13. Spektralfilter nach einem der vorhergehenden Ansprüche, wobei die besagte mindestens eine erste zentrale Wellenlänge zwischen im Wesentlichen 0,850 $\mu$m und 30 $\mu$m liegt.

14. Spektralfilter nach einem der vorhergehenden Ansprüche, das außerdem ein Substrat umfasst, wobei die Einheit aus dielektrischer Schicht und Metallgitter in der Umrandung einer Öffnung, die in dem besagten Substrat ausgebildet ist, hängt.

15. Multispektrale Matrix (600), die eine Einheit von Spektralfiltern nach einem der Ansprüche 1 bis 13 umfasst, wobei die Gitter ($101_A$, $101_B$, $101_C$, $101_D$) der besagten Spektralfilter mit derselben Schicht (102) aus dielektrischem Material gekoppelt sind, wobei die Einheit aus dielektrischer Schicht und Metallgittern von Filtern in der Umrandung einer Öffnung, die in ein und demselben Substrat (601) ausgebildet ist, hängt.

16. Optronisches System (800) zur Erfassung von nahem Infrarot und Infrarot, das einen Detektor (802) und ein Spektralfilter nach Anspruch 14 oder eine multispektrale Matrix (600) nach Anspruch 15 umfasst.

17. Optronisches Erfassungssystem nach Anspruch 16, das außerdem einen Polarisator (803) umfasst, der das Polarisieren einer einfallenden Welle gemäß einer Richtung ermöglicht, die parallel zu einer der Richtungen von Schlitzen des Metallgitters oder von mindestens einem der Metallgitter des oder der Filter ist.

18. Verfahren zur Herstellung eines Spektralfilters nach Anspruch 14 oder einer multispektralen Matrix nach Anspruch 15, das Folgendes umfasst:

- Abscheiden einer Siliziumdioxidschicht auf einer der Seiten eines Substrats und einer dielektrischen Dünnschicht auf der anderen Seite des Substrats, um den Wellenleiter zu bilden,
- Abscheiden des oder der Metallgitter auf der besagten Schicht aus dielektrischem Material gemäß einem gegebenen Muster,
- Ätzen des Siliziumdioxids auf der Rückseite des Substrats gemäß einem durch UV- oder Elektronenstrahllithographie definierten Muster, das mit dem Muster des oder der Gitter ausgerichtet ist, das bzw. die auf der Vorderseite ausgebildet ist bzw. sind, danach Ätzen des Siliziumsubstrats von einer Seite zur anderen gemäß dem vorherigen Muster, um eine hängende Membran zu erhalten, die von der dielektrischen Schicht und dem oder den Gittern gebildet wird.

**19.** Herstellungsverfahren nach Anspruch 18, wobei das Abscheiden des oder der Metallgitter nach UV- oder Elektronenstrahllithographie erzielt wird.

**20.** Herstellungsverfahren nach Anspruch 18, wobei das Abscheiden des Metallgitters oder der Metallgitter nach Nanoprägung erzielt wird.

**Claims**

**1.** A bandpass spectral filter (100), optimized for the transmission of an incident wave at at least one first given central wavelength $\lambda_0$, **characterized in that** it comprises:

- a metallic grating (101) of thickness (t) greater than about $\lambda_0/50$ and comprising at least one first assembly of substantially identical, parallel slits of width (*w*) smaller than about $\lambda_0 / 10$, spaced apart in a periodic or quasi-periodic manner according to a first period (d, $d_1$) smaller than said first central wavelength,
- a dielectric material layer (102) of given thickness (h) and given refractive index (ng), coupled with the metallic grating to form a waveguide for the waves diffracted by the grating, said first period of the grating being suitably adapted so that only orders 0 and $\pm 1$ of a wave at normal incidence and wavelength $\lambda_0$ are diffracted in the dielectric material layer, the dielectric layer and grating assembly being suspended in a fluid of refractive index close to 1.

**2.** The spectral filter as claimed in claim 1, in which the metallic grating comprises a second assembly of substantially identical, parallel slits, spaced apart in a periodic or quasi-periodic manner according to a second period ($d_2$), the slits of the second assembly of slits being arranged in a different direction from that of the slits of the first assembly.

**3.** The spectral filter as claimed in claim 2, in which the width of the slits of the second assembly of slits is substantially identical to that of the slits of the first assembly of slits and the two periods are identical.

**4.** The spectral filter as claimed in claim 2, optimized for the filtering of an incident wave at at least one first and one second central wavelength $\lambda_{01}$ and $\lambda_{02}$, in which the two periods are different, smaller than the first and second wavelengths respectively, the period along each of the dimensions being suitably adapted so that only orders 0 and 1 of a wave at normal incidence and wavelength $\lambda_{01}$ or $\lambda_{02}$ respectively are diffracted in the dielectric material layer.

**5.** The spectral filter as claimed in any one of claims 2 to 4, in which the slits of said first and second assemblies of slits are perpendicular.

**6.** The spectral filter as claimed in claim 1, in which the metallic grating comprises a plurality of assemblies of substantially identical, parallel slits, spaced apart in a periodic or quasi-periodic manner, the slits of each of the assemblies of slits being arranged along different directions ($D_1$, $D_2$, $D_3$) to form a pattern (50) repeated along two directions ($\Delta_1$, $\Delta_2$).

**7.** The spectral filter as claimed in claim 1, in which said pattern (50) is hexagonal or parallelogram-shaped.

**8.** The spectral filter as claimed in any one of the preceding claims, in which the dielectric material layer (102) is structured according to a pattern substantially similar to that formed among the slits of the grating.

**9.** The spectral filter as claimed in any one of the preceding claims, in which the thickness (h) of the dielectric layer is sufficiently thin to permit only a single guided mode in the dielectric layer at said at least one first central wavelength.

**10.** The spectral filter as claimed in any one of claims 1 to 8, in which the thickness of the dielectric layer is sufficiently thick to allow the propagation of several guided modes in the dielectric layer.

**11.** The spectral filter as claimed in any one of the preceding claims, in which the material forming the dielectric layer comprises one of the materials chosen from among silicon nitride, silicon carbide, silicon oxide, yttrium fluoride, zinc sulfide, aluminum oxide or magnesium oxide.

**12.** The spectral filter as claimed in any one of the preceding claims, in which the material forming the grating comprises one of the metals chosen from among gold, aluminum, copper, tungsten, nickel, platinum, silver.

**13.** The spectral filter as claimed in any one of the preceding claims, in which said at least first central wavelength lies between substantially 0.850 $\mu$m and 30 $\mu$m.

**14.** The spectral filter as claimed in any one of the preceding claims, comprising further a substrate, the dielectric layer and metallic grating assembly being suspended on the rim of an orifice formed in said substrate.

**15.** A multispectral array (600) comprising an assembly of spectral filters as claimed in any one of claims 1 to 13, the gratings ($101_A$, $101_B$, $101_C$, $101_D$) of said spectral filters being coupled with the same dielectric material layer (102), the dielectric layer and metallic gratings assembly of the filters being suspended on the rim of an orifice formed in one and the same substrate (601).

16. A near-infrared or infrared optronic detection system (800) comprising a detector (802) and a spectral filter as claimed in claim 14 or a multispectral array (600) as claimed in claim 15.

17. The optronic detection system as claimed in claim 16, comprising further a polarizer (803) making it possible to polarize an incident wave in a direction parallel to one of the directions of the slits of the or of at least one of the metallic grating(s) of the filter or filters.

18. A method for the fabrication of a spectral filter as claimed in claim 14 or of a multispectral array as claimed in claim 15 comprising:

   - the deposition on one of the faces of a substrate of a silica layer and on the other face of the substrate of a thin dielectric layer to form the waveguide,
   - the deposition of the metallic grating or gratings on said dielectric material layer according to a given pattern,
   - the etching of the silica at the rear face of the substrate according to a pattern defined by UV lithography or electron beam lithography, aligned with the pattern of the grating or gratings formed in the front face, and then the etching of the silicon substrate right across, according to the previous pattern, so as to obtain a suspended membrane formed of the dielectric layer and of the grating or gratings.

19. The fabrication method as claimed in claim 18, in which the deposition of the metallic grating or gratings is obtained after UV lithography or electron beam lithography.

20. The fabrication method as claimed in claim 18, in which the deposition of the metallic grating or gratings is obtained after nano-printing.

FIG.1A

FIG.1B

100

103

TE
TM

TE
TM

TE

d

101
102

TM

FIG.2A

100

103

TE
TM

TE
TM

d

d

101
102

TE
TM

FIG.2B

100

103

TE
TM

TE
TM

TE TM

d₂

d₁

101
102

TM TE

FIG.2C

FIG.3

EP 2 616 855 B1

FIG.4A

FIG.4B

FIG.5A

FIG.5B

FIG.6

EP 2 616 855 B1

FIG.7

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008122431 A
- US 5726805 A
- WO 2007118895 A

**Littérature non-brevet citée dans la description**

- **ED PALIK.** Handbooks of optical constants of solids. 1985
- **J. P. HUGONIN ; P. LALANNE.** Reticolo software for grating analysis. Institut d'Optique, 2005
- **G.VINCENT et al.** Large-area dielectric and metallic freestanding gratings for midinfrared optical filtering applications. *J.Vac.Sci.Technol. B,* 2008, vol. 26, 1852